# EUROPÄISCHE PATENTSCHRIFT

(11) **EP 2 570 060 B1**
(45) Veröffentlichungstag und Bekanntmachung des Hinweises auf die Patenterteilung: **10.09.2014**
(21) Anmeldenummer: 12401156.0
(22) Anmeldetag: 17.07.2012
(51) Int. Cl.: A47J 31/44

(54) **Vorrichtung zur Erzeugung von Milchschaum**
Apparatus for the production of milk foam
Appareil pour la production de mousse de lait

(30) Priorität: 17.09.2011 DE 102011113717
(43) Veröffentlichungstag der Anmeldung: 20.03.2013
(73) Patentinhaber: Severin Elektrogeräte GmbH, 59846 Sundern (DE)
(72) Erfinder: Köster, Christian, 59581 Warstein (DE)
(74) Vertreter: Köchling, Conrad-Joachim

(56) Entgegenhaltungen:
- DE-A1-102008 018 007
- DE-U1-202009 011 184

## Beschreibung

Die Erfindung betrifft eine Vorrichtung zur Erzeugung von Milchschaum, zumindest bestehend aus einer Mischeinrichtung mit einer Mischkammer und einem innerhalb der Mischkammer rotierenden Quirl, in der der Milchschaum durch Vermischen von Umgebungsluft mit Milch erzeugt oder erzeugbar ist, mit einem Zulauf zur Zuführung von Milch und Umgebungsluft in die Mischkammer, sowie einem Auslass zur Abgabe des erzeugten Milchschaumes aus der Mischkammer, ferner einem Elektromotor zum Antrieb des Quirls, wobei die Mischkammer zylindrisch ausgebildet ist.

Vorrichtungen zur Erzeugung von Milchschaum sind im Stand der Technik vielfach bekannt. Derartige Vorrichtungen können sowohl Bestandteil einer Heißgetränkemaschine wie beispielsweise eines Kaffeevollautomaten oder auch autark als sogenanntes "Stand-Alone-Gerät" zur Erzeugung von Milchschaum ihren Einsatz finden.

Insbesondere bei einem innerhalb einer Heißgetränkemaschine, insbesondere Heißgetränkeautomaten integrierten Vorrichtung zur Erzeugung von Milchschaum kann diese modulartig innerhalb der Heißgetränkemaschine angeordnet sein, um je nach Wahl des Benutzers mit der Maschine verschiedene, aus Kaffee und Milchschaum gemischte Getränke herzustellen.

All diesen Vorrichtungen ist es gemein, dass sie von Zeit zu Zeit eine gründliche Reinigung sämtlicher Komponenten erfordern, da Rückstände der Milch beziehungsweise des Milchschaumes innerhalb der Vorrichtung verbleiben, dort antrocknen und gegebenenfalls ein später erzeugtes Mischgetränk negativ beeinflussen.

Zur Förderung der Milch in die Mischkammer ist beispielsweise aus der GB-A-1344825 und aus der EP 1 472 963 B 1 der Einsatz einer Schlauch-Quetsch-Pumpe bekannt.

Aus der DE 10 2008 018 007 ist eine Vorrichtung zum Emulgieren einer Mischung aus Luft, Dampf und Milch, insbesondere ein Milchaufschäumer für einen Kaffeeautomaten, mit einem Gehäuse, in welchem eine Emulgierkammer vorgesehen ist, die über einen tangential in die Emulgierkammer eintretenden Zuführkanal mit einem Luft-Milch-Dampf-Gemisch beliefert wird, bekannt. Dabei ist in der Emulgierkammer ein Radialflügel aufweisendes Schäumorgan angeordnet, dessen Achse quer zur Einströmrichtung des Luft-, Milch-, Dampfgemisches ausgerichtet ist und dessen Radialflügel in Umfangsrichtung gekrümmt ausgebildet sind.

Eine weitere Vorrichtung zum Schaumigschlagen von Milch ist beispielsweise aus der DE 20 2009 007 946 U 1 bekannt.

Aufgrund des eingangs genannten Standes der Technik liegt der vorliegenden Erfindung die Aufgabe zugrunde, eine Vorrichtung zur Erzeugung von Milchschaum der eingangs genannten Art zu schaffen, mit der auch kalter Milchschaum erzeugt werden kann, die zum Zwecke der Reinigung schnell und einfach zerlegbar und auch wieder zusammenbaubar ist, die je nach Einsatzzweck modulartig in eine Heißgetränkemaschine integrierbar ist und dabei kostengünstig und einfach herstellbar ist und eine hohe Lebensdauer aufweist.

Zur Lösung dieser Aufgabe schlägt die Erfindung vor, dass der Quirl zahnradartig ausgebildet ist und das am ringförmigen Innenmantel der Mischkammer mindestens ein nach radial innen gerichteter Steg ausgebildet ist, der in einem zwischen dem Umfang des Quirls und dem Innenmantel der Mischkammer gebildeten Ringkanal hineinragt.

Hierdurch wird die Milch durch eine an sich bekannte Schlauchpumpe aus dem Milchbehälter oder gegebenenfalls direkt aus einer Milchverpackung angesaugt und durch eine Luftpumpe geförderte oder angesaugte Luft hinzugefügt. Das erzeugte Milch-Luft-Gemisch wird nun in die Mischkammer geleitet.

Die zugeführten Stoffe sind dabei beispielsweise durch den Querschnitt der Zuleitungen in Menge oder Verhältnis aufeinander abgestimmt, nicht aber aktiv geregelt. In der zylindrischen Mischkammer rotiert der zahnradartige Quirl und versetzt das zugeführte Milch-Luft-Gemisch in Bewegung. Der rotierende zahnradartige Quirl steht dabei in Wirkverbindung mit einem radial nach innen gerichteten, am ringförmigen Innenmantel der Mischkammer angeordneten oder ausgebildeten Steg, so dass das verwirbelte Milch-Luft-Gemisch gegen den Steg getrieben wird und durch das Zusammenwirken des rotierenden Quirls und des die Rotation bremsenden Steges Milchschaum entsteht.
Es entsteht zudem ein geringer Überdruck innerhalb der Mischkammer, so dass eine Abgabe des erzeugten Milchschaumes durch den Auslass der Mischkammer automatisch erfolgt.

Zur Erhöhung des Überdruckes innerhalb des Gehäuses und zur Erhöhung der erzeugten Schaumbildung kann besonders bevorzugt vorgesehen sein, dass der Auslass eine Querschnittsverjüngung aufweist.

Durch die Querschnittsverjüngung des Auslasses wird die erzeugte Menge an Schaum erhöht, wobei gleichzeitig der Überdruck im Gehäuse, mittels dessen der Schaum durch den Auslass abgegeben werden kann, erhöht wird.

Dabei kann besonders bevorzugt vorgesehen sein, dass ein Steg in Rotationsrichtung des Quirls dem Auslass der Mischkammer folgend am Innenmantel der Mischkammer angeordnet ist.

Durch das Zusammenwirken von rotierendem Quirl und quasi bremsenden Steg kann eine besonders hohe Menge an Schaum durch die Vorrichtung erzeugt werden.

Auch kann besonders bevorzugt vorgesehen sein, dass die Mischkammer aus einem topfartigen Gehäuse mit Deckel besteht, wobei auf dem Boden des Gehäuses ein zylinder- oder kegelstumpfartiger Vorsprung als Achse angeordnet ist, auf der der zahnradartige Quirl drehbar angeordnet ist.

Dabei kann besonders bevorzugt vorgesehen sein, dass der Zulauf und der Auslass gegenüberliegend auf der Topfaußenseite oder dem ringförmigen Außenmantel der Mischkammer angeordnet sind.

Wiederum dabei kann besonders bevorzugt vorgesehen sein, dass der Zulauf und der Auslass jeweils durch einen Nippel gebildet ist, auf den ein Schlauchabschnitt oder ein Rohrstück lösbar und gegenüber der Umgebung abgedichtet aufsteckbar oder aufgesteckt ist.

Durch die Anordnung derartiger Nippel ist ein schnelles und einfaches Verbinden und auch wieder lösen von entsprechenden Schlauchabschnitten oder Rohrstücken an dem Zulauf beziehungsweise dem Auslass der Mischkammer ermöglicht. Dies ermöglicht insbesondere im Reinigungsfall ein schnelles Demontieren und später wieder Montieren der Mischkammer.

Darüber hinaus kann besonders bevorzugt vorgesehen sein, dass die Mischkammer und der zahnradartige Quirl aus Kunststoff bestehen, wobei an dem Quirl oder innerhalb des Quirls ein Magnet angeordnet ist, welcher in Wirkverbindung mit einem weiteren, an einer Motorwelle angeordneten Magneten steht, sodass eine Drehmomentübertragung vom Motor auf den Quirl durch eine Wandung beziehungsweise den Boden der Mischkammer hindurch auf den Quirl erfolgt.

Hierdurch ist jeglicher physischer Kontakt zwischen dem Quirl und einem Motor zum Antrieb des Quirls vermieden, so dass im Falle einer Reinigung lediglich die Mischkammer mit Quirl, nicht aber Teile des Motors von der Vorrichtung entfernt werden müssen, um gereinigt zu werden. Somit ist eine besonders schnelle Wartung und / oder Reinigung der Mischkammer ermöglicht.

Auch ist im Bedarfsfall ein kostengünstiges und einfaches Austauschen von Teilen der Vorrichtung ermöglicht.

Zudem kann besonders bevorzugt vorgesehen sein, dass der Deckel am Gehäuse arretierbar ist, beispielsweise mittels eines Bajonettverschlusses, und der Deckel ein Betätigungselement, beispielsweise einen Griff, aufweist, mittels dessen der Deckel vom Gehäuse lösbar und wieder am Gehäuse arretierbar ist.

Dabei kann besonders bevorzugt vorgesehen sein, dass zwischen Gehäuse und Deckel eine Dichtung angeordnet ist.

Die Anordnung eines derartigen Deckels mit Griff und einer zwischen Gehäuse und Deckel angeordneten Dichtung ermöglicht auch für einen Durchschnittsnutzer das schnelle und einfache Zerlegen der Mischkammer zur Reinigung der Mischkammer und der darin befindlichen Teile. Ein derartiger Griff muss lediglich auf an sich bekannte Art und Weise händisch bewegt werden, um den Deckel von dem Gehäuse abzunehmen, so dass eine Reinigung für nahezu jeden Benutzer ermöglicht ist, ohne dabei besondere Fachkenntnisse oder spezielle Werkzeuge zu benötigen.

Insbesondere zur Verwendung innerhalb eines Heißgetränkeautomaten kann besonders bevorzugt vorgesehen sein, dass die Vorrichtung eine modulartige Trägerplatte aufweist, wobei die Vorrichtung zusätzlich eine elektrische Luftpumpe zur Ansaugung von Umgebungsluft und eine elektrische Schlauchpumpe zur Ansaugung und Förderung von Milch umfasst, wobei die Schlauchpumpe und die Mischkammer auf einer ersten Seite der Trägerplatte und die Luftpumpe und der Elektromotor zum Antrieb des Quirls auf einer zweiten Seite der Trägerplatte angeordnet sind. Auch davon abweichende Anordnungen, wie beispielsweise die Anordnung aller Anbauteile auf einer Seite der Trägerplatte sind möglich.

Eine derartige modulartige Trägerplatte kann beispielsweise innerhalb eines Heißgetränkeautomaten integriert sein, wobei wiederum die zu reinigenden Teile auf schnelle und einfache Art und Weise von der Modulplatte entfernt werden können, so dass eine gründliche Reinigung auch durch einen Durchschnittsbenutzer erfolgen kann. Des Weiteren kann beispielsweise im Reparaturfall die gesamte modulartige Trägerplatte mit allen Komponenten oder aber auch einzelne Komponenten der Trägerplatte schnell und einfach demontiert und gegebenenfalls erneuert werden. Hierzu kann beispielsweise die modulartige Trägerplatte komplett aus der Maschine entnommen werden und gegen eine Austauschträgerplatte getauscht werden.

Um ein besonders schnelles Reinigen der Mischkammer mitsamt ihrer Komponenten zu ermöglichen, kann besonders bevorzugt vorgesehen sein, dass die Mischkammer samt Deckel, Dichtung und Quirl lösbar an der Trägerplatte befestigt ist.

Weiter kann besonders bevorzugt vorgesehen sein, dass der Ausgang der Schlauchpumpe und der Luftpumpe in den Zulauf der Mischkammer einmünden.

Hierzu kann beispielsweise zwischen der Schlauchpumpe und der Luftpumpe einerseits und dem Zulauf der Mischkammer andererseits ein T-Stück angeordnet sein, mittels dessen eine Mischung von angesaugter Umgebungsluft und angesaugter Milch erfolgt, so dass durch den Zulauf der Mischkammer bereits ein Luft-Milch-Gemisch in die Mischkammer eingeführt wird.

Darüber hinaus kann besonders bevorzugt vorgesehen sein, dass er Quirl umlaufend, quer zur Drehrichtung ausgerichtete Rippen aufweist, die eine Art Zahnung bilden.

Schließlich kann besonders bevorzugt vorgesehen sein, dass die Rippen an ihren freien Eckbereichen abgerundet ausgebildet sind.

Durch die an den freien Eckbereichen abgerundeten Rippen, die eine Art Zahnung bilden, wird eine besonders große Menge Schaum erzeugt.

Ein Ausführungsbeispiel der Erfindung ist in den Figuren dargestellt und im Folgenden näher beschrieben.

Es zeigt:
- Figur 1: eine erfindungsgemäße Mischkammer in Explosionsdarstellung;
- Figur 2: eine modulartige Trägerplatte in der Zusammenbaulage.

In den Figuren ist eine Vorrichtung zur Erzeugung von Milchschaum gezeigt. Wie aus den Figuren ersichtlich, besteht die Vorrichtung aus einer Mischeinrichtung mit einer Mischkammer 1 und einem innerhalb der Mischkammer 1 rotierenden Quirl 2. Durch den innerhalb der Mischkammer 1 rotierenden scheibenförmigen Quirl 2 wird durch Vermischen von Umgebungsluft mit Milch, Milchschaum erzeugt. An der Mischkammer 1 ist ein Zulauf 3 zur Zuführung von Milch und Umgebungsluft in die Mischkammer 1 und ein Auslass 4 zur Abgabe des erzeugten Milchschaumes aus der Mischkammer 1 heraus angeordnet. Ferner weist die Vorrichtung einen Elektromotor 5 zum Antrieb des Quirls 2 auf. Die Mischkammer 1 ist bei 6 zylindrisch ausgebildet.

Erfindungsgemäß ist der Quirl 2 zahnradartig ausgebildet und am ringförmigen Innenmantel der Mischkammer 1 ist mindestens ein nach radial innen gerichteter Steg 7 ausgebildet. Der Steg 7 ragt dabei in einen zwischen dem Umfang des Quirls 2 und dem Innenmantel der Mischkammer 1 gebildeten Ringkanal hinein. Der Auslass 4 weist eine Querschnittsverjüngung auf. Hierdurch bildet sich innerhalb der Mischkammer 1 ein Überdruck, wodurch das Ausfließen durch den Auslass 4 und gleichzeitig eine Steigerung der Milchschaumproduktion bewirkt wird.

Der Steg 7 ist in Rotationsrichtung des Quirls 2 dem Auslass 4 der Mischkammer 1 folgend am Innenmantel der Mischkammer 1 angeordnet. Die durch eine Pumpe, die in an sich bekannter Weise durch eine Schlauchpumpe 15 aus einem Milchbehälter oder auch direkt aus einer Milchverpackung angesaugte Milch wird zusammen mit von einer Luftpumpe 14 geförderten Luft in die Mischkammer 1 durch den Zulauf 3 geleitet. Die zugeführten Stoffe sind dabei in Menge oder Verhältnis aufeinander abgestimmt, aber nicht aktiv geregelt. Durch die Rotation des Quirls 2 innerhalb der Mischkammer 1 wird das zugeführte Milch-Luft-Gemisch in Bewegung versetzt, so dass Milchschaum entsteht. Dieser Prozess wird insbesondere durch den dem Auslass 4 folgenden Steg 7 begünstigt. Zudem entsteht durch das in die Mischkammer 1 hineingepumpte und in Bewegung gebrachte Milch-Luft-Gemisch ein Überdruck innerhalb der Mischkammer 1, so dass eine Abgabe des erzeugten Milchschaumes durch den Auslass 4 der Mischkammer 1 nach Erzeugung des Milchschaumes automatisch erfolgt.

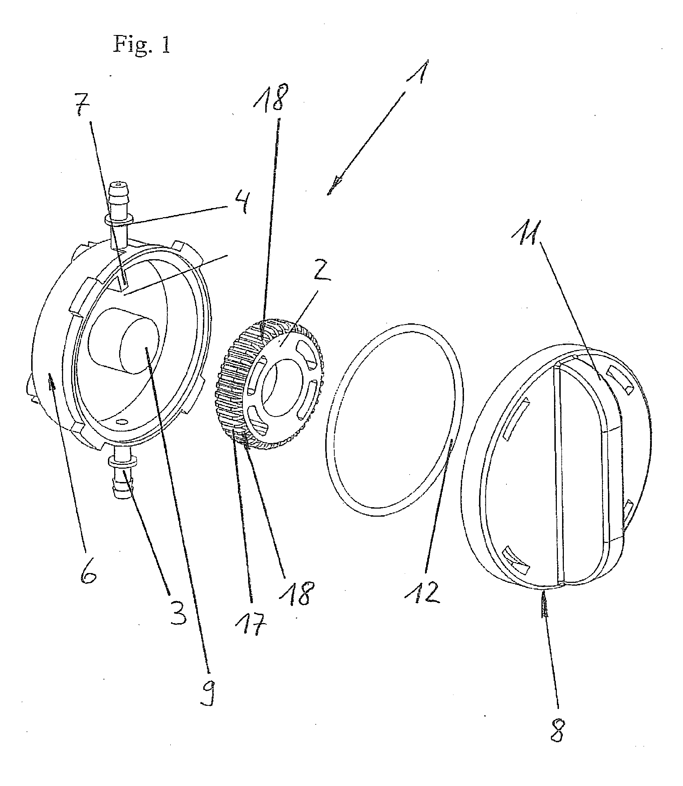

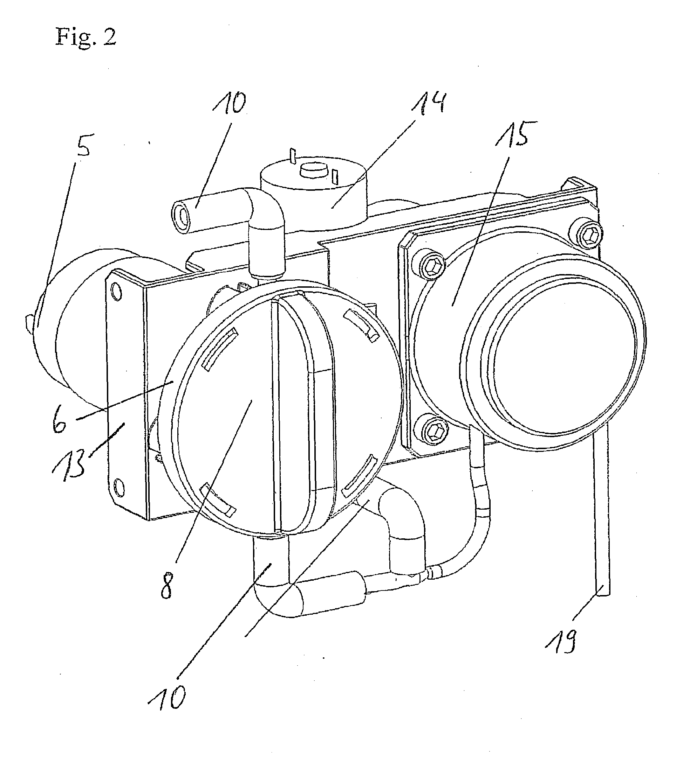

Im Ausführungsbeispiel besteht die Mischkammer 1 aus einem topfartigen Gehäuse mit Deckel 8. Dabei ist auf dem Boden des Gehäuses ein kegelstumpfartiger Vorsprung 9 als Achse angeordnet, auf der der zahnradartige Quirl 2 drehbar angeordnet ist. Der Zulauf 3 und der Auslass 4 der Mischkammer 1 ist jeweils gegenüberliegend auf der Topfaußenseite der Mischkammer 1 angeordnet. Dabei sind sowohl der Zulauf 3 als auch der Auslass 4 jeweils durch einen Nippel gebildet, auf den ein Schlauchabschnitt 10 oder alternativ aus den Figuren nicht ersichtlich, ein Rohrstück lösbar und gegenüber der Umgebung abgedichtet aufsteckbar (Figur 1) oder aufgesteckt (Figur 2) ist. Hierdurch ist ein schnelles und einfaches Entfernen der Verbindungsleitungen und somit Lösen der gesamten Mischkammer 1 mit Quirl 2 beispielsweise zu Reinigungszwecken ermöglicht.

Die Mischkammer 1 und der zahnradartige Quirl 2 bestehen aus Kunststoff. Dabei ist innerhalb des Quirls 2 ein Magnet angeordnet, welcher in Wirkverbindung mit einem weiteren, an einer Motorwelle angeordneten Magneten steht. Hierdurch ist eine Drehmomentübertragung vom Motor auf den Quirl 2 durch eine Wandung beziehungsweise den Boden der Mischkammer 1 hindurch auf den Quirl 2 ermöglicht. Der Elektromotor 5 zum Antrieb des Quirls 2 steht somit nicht in direkter physischer Verbindung mit dem Quirl 2, so dass im Benutzungsfall keinerlei Verschmutzungen am Motor 5 entstehen können.

Der Deckel 8 ist mittels eines Bajonettverschlusses am Gehäuse arretierbar und weist zur schnellen und einfachen händischen Betätigung seitens eines Benutzers einen Griff 11 auf, mittels dessen der Deckel 8 vom Gehäuse lösbar und wieder am Gehäuse arretierbar ist. Hierdurch kann auch ein ungeübter Benutzer auf schnelle und einfache Art und Weise den Deckel 8 beispielsweise zur Reinigung der Mischkammer 1 und/oder ihrer Komponenten entfernen und auch wieder anbringen.

Zwischen Gehäuse und Deckel 8 ist wie insbesondere aus Figur 1 ersichtlich eine Dichtung 12 angeordnet.

Der Quirl 2 rotiert mit etwa 3.600 Umdrehungen pro Minute innerhalb der Mischkammer 1, wodurch besonders hohe Schaummengen erzeugt werden können.

Um beispielsweise ein schnelles und einfaches Integrieren einer entsprechenden Vorrichtung zur Erzeugung von Milchschaum innerhalb einer Heißgetränkemaschine, wie beispielsweise einen Kaffeevollautomaten zu ermöglichen, ist die Vorrichtung auf einer modulartigen Trägerplatte 13 angeordnet. Dabei weist die Vorrichtung eine elektrische Luftpumpe 14 zur Ansaugung von Umgebungsluft und eine elektrische Schlauchpumpe 15 zur Aussaugung und Förderung von Milch auf. Dabei finden üblicherweise und in an sich bekannter Weise Peristaltikpumpen, ihren Einsatz. In dem in Figur 2 gezeigten Ausführungsbeispiel sind die Schlauchpumpe 15 und die Mischkammer 1 auf einer ersten Seite der Trägerplatte 13 und die Luftpumpe 14 und der Elektromotor 5 zum Antrieb des Quirls 2 auf einer zweiten Seite der Trägerplatte 13 angeordnet. In weiteren, in den Figuren nicht gezeigten, Ausführungsbeispielen sind auch davon abweichende Anordnungen der Schlauchpumpe 15, der Mischkammer 1, der Luftpumpe 14 und des Elektromotors 5 möglich. So ist es beispielsweise möglich, alle Anbauteile oder alle Anbauteile mit Ausnahme des Elektromotors 5 auf einer Seite der Trägerplatte 13 anzuordnen. Somit sind sämtliche Teile auf schnelle und einfache Art und Weise von der modulartigen Trägerplatte 13 lösbar und auch wieder befestigbar. Es besteht somit die Möglichkeit, eine derartige modulartige Trägerplatte 13 innerhalb kürzester Zeit komplett auszutauschen oder aber nach dem Entfernen aus einem Gerät Einzelteile wie beispielsweise die Mischkammer 1 oder andere Teile von der Trägerplatte 13 zu lösen und gegen entsprechende Ersatzteile auszutauschen.

Hierzu sind die Mischkammer 1 samt Deckel 8, Dichtung 12 und Quirl 2 lösbar an der Trägerplatte 13 befestigt. Wie insbesondere aus Figur 2 ersichtlich, münden der Ausgang der Schlauchpumpe 15 und der Luftpumpe 14 mittels eines zwischengeschalteten T-Stücks in den Zulauf 3 der Mischkammer 1 ein. Der Quirl 2 weist quer zur Drehrichtung ausgerichtete Rippen 17 auf, die eine Art Zahnung bilden. Die Rippen 17 sind dabei an ihren freien Eckbereichen (bei 18) abgerundet ausgebildet, wodurch ein besonders hoher Schaumertrag ermöglicht ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Erzeugung von Milchschaum, zumindest bestehend aus einer Mischeinrichtung mit einer Mischkammer (1) und einem innerhalb der Mischkammer (1) rotierenden scheibenförmigen Quirl (2), in der der Milchschaum durch Vermischen von Umgebungsluft mit Milch erzeugt oder erzeugbar ist, mit einem Zulauf (3) zur Zuführung von Milch und Umgebungsluft in die Mischkammer (1), sowie einem Auslass (4) zur Abgabe des erzeugten Milchschaumes aus der Mischkammer (1), ferner einem Motor, insbesondere Elektromotor (5), zum Antrieb des Quirls (2), wobei die Mischkammer (1) zylindrisch (6) ausgebildet ist, **dadurch gekennzeichnet, dass** der Quirl (2) zahnradartig ausgebildet ist und das am ringförmigen Innenmantel der Mischkammer (1) mindestens ein nach radial innen gerichteter Steg (7) ausgebildet ist, der in einem zwischen dem Umfang des Quirls (2) und dem Innenmantel der Mischkammer (1) gebildeten Ringkanal hineinragt.

2. Vorrichtung nach Anspruch 1, **dadurch gekennzeichnet, dass** der Auslass (4) eine Querschnittsverjüngung aufweist.

3. Vorrichtung nach Anspruch 1 oder 2, **dadurch gekennzeichnet, dass** ein Steg (7) in Rotationsrichtung des Quirls (2) dem Auslass (4) der Mischkammer (1) folgend am Innenmantel der Mischkammer (1) angeordnet ist.

4. Vorrichtung nach einem der Ansprüche 1 bis 3, **dadurch gekennzeichnet, dass** die Mischkammer (1) aus einem topfartigen Gehäuse mit Deckel (8) besteht, wobei auf dem Boden des Gehäuses ein zylinder- oder kegelstumpfartiger Vorsprung (9) als Achse angeordnet ist, auf der der zahnradartige Quirl (2) drehbar angeordnet ist.

5. Vorrichtung nach einem der Ansprüche 1 bis 4, **dadurch gekennzeichnet, dass** der Zulauf (3) und der Auslass (4) gegenüberliegend auf der Topfaußenseite oder dem ringförmigen Außenmantel der Mischkammer (1) angeordnet sind.

6. Vorrichtung nach Anspruch 5, **dadurch gekennzeichnet, dass** der Zulauf (3) und der Auslass (4) jeweils durch einen Nippel gebildet ist, auf den ein Schlauchabschnitt (10) oder ein Rohrstück lösbar und gegenüber der Umgebung abgedichtet aufsteckbar oder aufgesteckt ist.

7. Vorrichtung nach einem der Ansprüche 1 bis 6, **dadurch gekennzeichnet, dass** die Mischkammer (1) und der zahnradartige Quirl (2) aus Kunststoff bestehen, wobei an dem Quirl (2) oder innerhalb des Quirls (2) ein Magnet angeordnet ist, welcher in Wirkverbindung mit einem weiteren, an einer Motorwelle angeordneten Magneten steht, sodass eine Drehmomentübertragung vom Motor auf den Quirl (2) durch eine Wandung beziehungsweise den Boden der Mischkammer (1) hindurch auf den Quirl (2) erfolgt.

8. Vorrichtung nach einem der Ansprüche 4 bis 7, **dadurch gekennzeichnet, dass** der Deckel (8) am Gehäuse arretierbar ist, beispielsweise mittels eines Bajonettverschlusses, und der Deckel (8) ein Betätigungselement, beispielsweise einen Griff (11), aufweist, mittels dessen der Deckel (8) vom Gehäuse lösbar und wieder am Gehäuse arretierbar ist.

9. Vorrichtung nach einem der Ansprüche 4 bis 8, **dadurch gekennzeichnet, dass** zwischen Gehäuse und Deckel (8) eine Dichtung (12) angeordnet ist.

10. Vorrichtung nach einem der Ansprüche 1 bis 9, **dadurch gekennzeichnet, dass** der Quirl (2) mit etwa 3600 Umdrehungen pro Minute innerhalb der Mischkammer (1) rotiert.

11. Vorrichtung nach einem der Ansprüche 1 bis 10, **dadurch gekennzeichnet, dass** die Vorrichtung eine modulartige Trägerplatte (13) aufweist, wobei die Vorrichtung zusätzlich eine elektrische Luftpumpe (14) zur Ansaugung von Umgebungsluft und eine elektrische Schlauchpumpe (15) zur Ansaugung und Förderung von Milch umfasst, wobei die Schlauchpumpe (15) und die Mischkammer (1) auf einer ersten Seite der Trägerplatte (13) und die Luftpumpe (14) und der Elektromotor (5) zum Antrieb des Quirls (2) auf einer zweiten Seite der Trägerplatte (13) angeordnet sind.

12. Vorrichtung nach Anspruch 11, **dadurch gekennzeichnet, dass** die Mischkammer (1) samt Deckel (8), Dichtung (12) und Quirl (2) lösbar an der Trägerplatte (13) befestigt ist.

13. Vorrichtung nach Anspruch 11 oder 12, **dadurch gekennzeichnet, dass** der Ausgang der Schlauchpumpe (15) und der Luftpumpe (14) in den Zulauf (3) der Mischkammer (1) einmünden.

14. Vorrichtung nach einem der Ansprüche 1 bis 13, **dadurch gekennzeichnet, dass** der Quirl (2) umlaufend, quer zur Drehrichtung ausgerichtete Rippen (17) aufweist, die eine Art Zahnung bilden.

15. Vorrichtung nach Anspruch 14, **dadurch gekennzeichnet, dass** die Rippen (17) an ihren freien Eckbereichen abgerundet (bei 18) ausgebildet sind.

## Claims

1. An apparatus for the production of milk foam, at least comprising a mixing device with a mixing chamber (1) and a disc-shaped whisk (2) rotating inside the mixing chamber (1), in which mixing device the milk foam is generated or can be generated by mixing ambient air with milk, with an inlet (3) for supplying milk and ambient air into the mixing chamber (1), and an outlet (4) for delivering the generated milk foam from the mixing chamber (1), further comprising a motor, in particular an electric motor (5), for driving the whisk (2), the mixing chamber (1) having a cylindrical shape (6), **characterized in that** the whisk (2) is formed in a gear-like manner, and that on the annular inner surface of the mixing chamber (1), at least one web (7) showing radially inwardly is formed, which protrudes into an annular channel formed between the periphery of the whisk (2) and the inner surface of the mixing chamber (1).

2. The apparatus according to claim 1, **characterized in that** the outlet (4) has a cross-sectional taper.

3. The apparatus according to claim 1 or 2, **characterized in that** a web (7) is disposed, in the direction of rotation of the whisk (2), adjacent to the outlet (4) of the mixing chamber (1) on the inner surface of the mixing chamber (1).

4. The apparatus according to one of claims 1 to 3, **characterized in that** the mixing chamber (1) has a pot-shaped housing with a lid (8), on the bottom of the housing a cylindrical or truncated cone-like projection (9) being arranged as an axis, on which the gear-like whisk (2) is rotatably arranged.

5. The apparatus according to one of claims 1 to 4, **characterized in that** the inlet (3) and the outlet (4) are oppositely disposed on the outside of the pot or the annular outer surface of the mixing chamber (1).

6. The apparatus according to claim 5, **characterized in that** the inlet (3) and the outlet (4) are each formed by a nipple, to which a hose section (10) or a piece of pipe can be attached or is attached in a detachable manner sealed against the environment.

7. The apparatus according to one of claims 1 to 6, **characterized in that** the mixing chamber (1) and the gear-like whisk (2) are made of plastic, at the whisk (2) or inside the whisk (2), a magnet being arranged, which is operatively connected to another magnet arranged on a motor shaft, such that a torque transmission from the motor to the whisk (2) takes place through a wall or through the bottom of the mixing chamber (1).

8. The apparatus according to one of claims 4 to 7, **characterized in that** the lid (8) can be locked on the housing, for example by means of a bayonet lock, and that the lid (8) has an actuating element, for example a handle (11), by means of which the lid (8) can be removed from the housing and then be locked again on the housing.

9. The apparatus according to one of claims 4 to 8, **characterized in that** a seal (12) is disposed between the housing and the lid (8).

10. The apparatus according to one of claims 1 to 9, **characterized in that** the whisk (2) rotates at about 3,600 revolutions per minute within the mixing chamber (1).

11. The apparatus according to one of claims 1 to 10, **characterized in that** the apparatus comprises a modular carrier plate (13), the apparatus additionally comprising an electric air pump (14) for aspiration of ambient air and an electric peristaltic pump (15) for aspiration and transportation of milk, the peristaltic pump (15) and the mixing chamber (1) being disposed on a first side of the carrier plate (13), and the air pump (14) and the electric motor (5) for driving the whisk (2) being disposed on a second side of the carrier plate (13).

12. The apparatus according to claim 11, **characterized in that** the mixing chamber (1) together with lid (8), seal (12) and whisk (2) is attached at the carrier plate (13) in a detachable manner.

13. The apparatus according to claim 11 or 12, **characterized in that** the outputs of the peristaltic pump (15) and of the air pump (14) debouch into the inlet (3) of the mixing chamber (1).

14. The apparatus according to one of claims 1 to 13, **characterized in that** the whisk (2) comprises at its circumference ribs (17) aligned transversely to the direction of rotation, which form a kind of toothing.

15. The apparatus according to claim 14, **characterized in that** the ribs (17) are rounded off at their free corners (at 18).

## Revendications

1. Appareil pour la production de mousse de lait, au moins comprenant un dispositif mélangeur avec une chambre de mélange (1) et un agitateur (2) en forme de disque tournant au-dedans de la chambre de mélange (1), dans cette chambre de mélange la mousse de lait étant générée ou pouvant être générée en mélangeant l'air ambiante avec le lait, avec une entrée (3) pour l'alimentation du lait et de l'air ambiante dans la chambre de mélange (1), et une sortie (4) pour la distribution de la mousse de lait générée à partir de la chambre de mélange (1), en outre comprenant un moteur, en particulier un moteur électrique (5), pour entraîner l'agitateur (2), la chambre de mélange (1) ayant une forme cylindrique (6), **caractérisé en ce que** l'agitateur (2) est formé de manière d'une roue dentée, et que sur la surface intérieure annulaire de la chambre de mélange (1), au moins une entretoise (7) dirigée radialement vers l'intérieur est formée, qui fait saillie dans un canal annulaire formé entre la périphérie de l'agitateur (2) et la surface intérieure de la chambre de mélange (1).

2. Appareil selon la revendication 1, **caractérisé en ce que** la sortie (4) a un rétrécissement de la section transversale.

3. Appareil selon la revendication 1 ou 2, **caractérisé en ce qu'**une entretoise (7) est disposée, dans le sens de rotation de l'agitateur (2), voisine de la sortie (4) de la chambre de mélange (1) à la surface intérieure de la chambre de mélange (1).

4. Appareil selon une des revendications 1 à 3, **caractérisé en ce que** la chambre de mélange (1) a un boîtier en forme de pot avec un couvercle (8), sur le fond du boîtier une saillie (9) cylindrique ou tronconique étant disposée comme un axe, sur lequel l'agitateur (2) en forme de roue dentée est disposé de manière rotative.

5. Appareil selon une des revendications 1 à 4, **caractérisé en ce que** l'entrée (3) et la sortie (4) sont disposées en vis à vis sur l'extérieur du pot ou la surface extérieure annulaire de la chambre de mélange (1).

6. Appareil selon la revendication 5, **caractérisé en ce que** l'entrée (3) et la sortie (4) sont chacune formées par un raccord, auquel une section d'un tuyau (10) ou une partie d'une tube peut être enfichée ou est enfichée de manière amovible et étanche de l'environnement.

7. Appareil selon une des revendications 1 à 6, **caractérisé en ce que** la chambre de mélange (1) et l'agitateur (2) en forme de roue dentée sont en matière plastique, à l'agitateur (2) ou au-dedans de l'agitateur (2), un aimant étant disposé, qui est lié de façon opérationnelle à un autre aimant disposé sur un arbre du moteur, de façon qu'une transmission de couple du moteur à l'agitateur (2) ait lieu à travers une paroi ou à travers le fond de la chambre de mélange (1), respectivement.

8. Appareil selon une des revendications 4 à 7, **caractérisé en ce que** le couvercle (8) peut être verrouillé sur le boîtier, par exemple au moyen d'une fermeture à baïonnette, et que le couvercle (8) a un élément actionneur, par exemple une poignée (11), au moyen de laquelle le couvercle (8) peut être enlevé du boîtier et puis de nouveau être verrouillé sur le boîtier.

9. Appareil selon une des revendications 4 à 8, **caractérisé en ce qu'**un joint d'étanchéité (12) est disposé entre le boîtier et le couvercle (8).

10. Appareil selon une des revendications 1 à 9, **caractérisé en ce que** l'agitateur (2) tourne à environ 3.600 tours par minute au-dedans de la chambre de mélange (1).

11. Appareil selon une des revendications 1 à 10, **caractérisé en ce que** l'appareil comprend une plaque de support (13) modulaire, l'appareil en addition comprenant une pompe à air (14) électrique pour l'aspiration de l'air ambiante et une électrique pompe péristaltique (15) pour l'aspiration et le transport du lait, la pompe péristaltique (15) et la chambre de mélange (1) étant disposées sur un premier côté de la plaque de support (13), et la pompe à air (14) et le moteur électrique (5) pour entraîner l'agitateur (2) étant disposés sur un deuxième côté de la plaque de support (13).

12. Appareil selon la revendication 11, **caractérisé en ce que** la chambre de mélange (1) ensemble avec le couvercle (8), le joint d'étanchéité (12) et l'agitateur (2) est attachée à la plaque de support (13) d'une façon amovible.

13. Appareil selon une des revendications 11 ou 12, **caractérisé en ce que** les sorties de la pompe péristaltique (15) et de la pompe à air (14) débouchent dans l'entrée (3) de la chambre de mélange (1).

14. Appareil selon une des revendications 1 à 13, **caractérisé en ce que** l'agitateur (2) comprend des nervures (17) circonférentielles alignées transversalement à la direction de rotation, qui forment un type de denture.

15. Appareil selon la revendication 14, **caractérisé en ce que** les nervures (17) sont arrondies à leurs coins libres (à 18).
